# EUROPEAN PATENT SPECIFICATION

(11) **EP 2 115 629 B1**
(45) Date of publication and mention of the grant of the patent: **18.06.2014**
(21) Application number: 07857503.2
(22) Date of filing: 12.12.2007
(51) Int. Cl.: G06F 17/14, G06F 15/80

(54) **PARALLEL PROCESSOR**
PARALLEL-PROZESSOR
PROCESSEUR PARALLÈLE

(30) Priority: 22.12.2006 EP 06127090; 23.12.2006 US 871779 P
(43) Date of publication of application: 11.11.2009
(73) Proprietor: Telefonaktiebolaget LM Ericsson (publ), 164 83 Stockholm (SE)
(72) Inventor: PERSSON, Per, 247 34 Södra Sandby (SE); GUSTAFSSON, Harald, 223 63 Lund (SE)
(74) Representative: Andersson, Karl Ola
(86) International application number: PCT/EP2007/063849
(87) International publication number: WO 2008/077804

(56) References cited:
- WO-A-87/05418
- US-A- 5 220 525
- US-A- 5 371 696
- HANNA C A ET AL: "BIT MANIPULATOR" IBM TECHNICAL DISCLOSURE BULLETIN, IBM CORP. NEW YORK, US, vol. 17, no. 6, 1 November 1974 (1974-11-01), pages 1575-1576, XP002011206 ISSN: 0018-8689
- SIDERIS ET AL: "Novel Systolic Schemes for Serial-Parallel Multiplication" EUSIPCO: 13TH EUROPEAN SIGNAL PROCESSING CONFERENCE, [Online] September 2005 (2005-09), - 8 September 2005 (2005-09-08) XP002437789 Retrieved from the Internet: URL:http://www.arehna.di.uoa.gr/Eusipco200 5/defevent/papers/cr1385.pdf> [retrieved on 2007-06-14]
- COOPER A R: "PARALLEL ARCHITECTURE MODIFIED BOOTH MULTIPLIER" IEE PROCEEDINGS G. ELECTRONIC CIRCUITS & SYSTEMS, INSTITUTION OF ELECTRICAL ENGINEERS. STEVENAGE, GB, vol. 135, no. 3, PART G, June 1988 (1988-06), pages 125-128, XP000718877 ISSN: 0622-0039
- MELANDER ET AL: "Implementation of a Bit-Serial FFT Processor with a Hierarchical Control Structure" PROCEEDINGS OF EUROPEAN CONFERENCE ON CIRCUIT THEORY AND DESIGN: ECCTD '95, [Online] 1995, XP002437790 Retrieved from the Internet: URL:http://www.es.isy.liu.se/publications/ papers_and_reports/1995/FFT_ECCTD95.pdf> [retrieved on 2007-06-14]

## Description

### Technical Field

The present invention relates to a parallel processor and a method of operating the parallel processor.

### Background

In a single-instruction multiple-data (SIMD) or SIMD-like processor, several data elements in vectors are processed in parallel. As the name suggests, a SIMD processor is adapted to execute the same (single) instruction on a plurality of different data elements in parallel. For example, the SIMD processor may execute a plurality of multiplications in parallel, a plurality of additions in parallel, etc. For some types of computations in a SIMD processor, a full vector of coefficients or data can be derived from a few values or elements only. For example, for butterfly operations in a fast Fourier transform (FFT), the coefficients, or twiddle factors, can be derived from a real number (or coefficient), R, and an imaginary number (or coefficient), I. The coefficient vector for the butterfly operation is [R, -I, R, I]. Each element of the coefficient vector (i.e. R, -I, R, and I) may be used as a coefficient in a separate parallel computation path, or lane, in a SIMD processor.

In a conventional SIMD processor, the full coefficient vector, [R, -I, R, I], would be stored in memory. This is inefficient, since memory storage capacity and memory bandwidth is wasted.

Alternatively, only coefficient R and I are stored in memory. The full coefficient vector may then be obtained by fetching the coefficients R and I from memory and processing said coefficients by separate software instructions. Such processing would in the FFT coefficient case e.g. be to copy the data and to negate the first imaginary coefficient. This typically takes at least two additional instruction cycles of the SIMD processor. This is inefficient, since additional instruction cycles are utilized for generating the full coefficient vector. Furthermore, if the SIMD processor has a pipelined architecture, wherein more then one instruction may be executed at the same time but in different stages of a pipeline, the pipeline may need to be stalled while awaiting the generation of the full coefficient vector. For example, the pipeline may need to be stalled if subsequent instructions require the full coefficient vector as input data. Thereby, so called bubbles are created in the pipeline, i.e. one or more stages of the pipeline are inactive. This means that the pipeline is inefficiently utilized, since instructions are executed at a lower rate than that of which the SIMD processor is capable.

WO 2006/033056, discloses a micro processor device comprising a vector processor architecture with a functional vector processor unit comprising first memory means for storing plural index vectors and processing means. The functional vector processor unit is arranged to receive a processing instruction and at least one input vector to be processed. The first memory means is arranged to provide the processing means with one of said plural index vectors in accordance with the processing instruction. The processing means is arranged to generate, in response to said instruction, at least one output vector having the elements of the at least one input vector rearranged in accordance with the one index vector provided. The index vector is also referred to as a shuffle pattern. Several shuffle patterns may be stored in a dedicated shuffle memory. A shuffle pattern may be chosen from the shuffle memory according to an input instruction. The processing means facilitates fetching of a data vector whose elements are not stored in order in memory by reordering the elements in an appropriate order. However, the complete data vector must be stored in memory.

Further background art is disclosed in:
WO01/25899 (Koninklijke Philips Electronics) 12.4.2001, and in SIDERIS ET AL: "Novel Systolic Schemes for Serial-Parallel Multiplication", EUSIPCO: 13TH EUROPEAN SIGNAL PROCESSING CONFERENCE, [Online] September 2005 (2005-09), - 8 September 2005 (2005-09-08), XP002437789.

### Summary

It is an object of the present invention to provide efficient means in a parallel processor for fetching data and coefficients from a memory.

According to a first aspect, a parallel processor having a plurality of parallel computational lanes is provided. The computational lanes are all arranged to execute the same operation, but on different data, in parallel. The operation to be executed in parallel is specified by software instructions of the parallel processor. The parallel processor comprises a data-vector generation unit. The data-vector generation unit comprises a first input port for receiving a first vector of data elements from a memory unit and a second input port for receiving a control vector. The data-vector generation unit further comprises an output port for outputting a second vector of data elements to the plurality of parallel computational lanes by supplying each data element of the second vector to a unique lane of the plurality of computational lanes. The second vector comprises more data elements than the first vector. The data-vector generation unit is adapted to generate the data elements of the second vector based on the data elements of the first vector and the control vector. More specifically, the data vector generation unit is adapted to, for a data element in the second vector, select one data element from the first vector based on control data in the control vector, and generate said data element in the second vector by performing an operation, which is specified in the control vector, on the selected data element from the first vector, such that the data element in the second vector is generated, based on control data in the control vector, as one of: identical to the selected data element from the first vector, the sign of the selected data element from the first vector, the negated sign of the selected data element from the first vector, the absolute value of the selected data element from the first vector, or the negated value of the selected data element from the first vector.

The data-vector generation unit may be adapted to, for a data element in the second vector, select one constant from a predetermined set of constants based on control data in the control vector and assign the selected constant to said data element in the second vector. The predetermined set of constants may comprise at least one of the numbers -1, 0, and 1.

The parallel processor may e.g. be a single-instruction multiple-data processor.

According to a second aspect, an electronic apparatus comprises the parallel processor. The electronic apparatus may e.g. be one of a portable or handheld mobile radio communication equipment, a mobile radio terminal, a mobile telephone, a pager, a communicator, an electronic organizer, a smartphone and a computer.

According to a third aspect, there is provided a method of operating a parallel processor having a plurality of parallel computational lanes, the computational lanes all being arranged to execute the same operation, but on different data, in parallel, the operation to be executed in parallel being specified by software instructions of the parallel processor. The method comprises receiving a first vector of data elements from a memory unit on a first input port of a data-vector generation unit of the parallel processor. Furthermore, the method comprises receiving a control vector on a second input port of the data-vector generation unit. Moreover, the method comprises generating data elements of a second vector of data elements based on the data elements of the first vector and the control vector. The second vector comprises more data elements than the first vector. More specifically, a data element in the second vector is generated, based on control data in the control vector, as one of: identical to the selected data element from the first vector, the sign of the selected data element from the first vector, the negated sign of the selected data element from the first vector, the absolute value of the selected data element from the first vector, or the negated value of the selected data element from the first vector. The method further comprises outputting the second vector to a plurality of computational lanes of the parallel processor via an output port of the data-vector generation unit by supplying each data element of the second vector to a unique lane of the plurality of computational lanes.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Further objects, features and advantages of the invention will appear from the following detailed description of the invention, reference being made to the accompanying drawings, in which:
Fig. 1 is a block diagram of a single-instruction multiple-data processor according to an embodiment;
Fig. 2a and b are block diagrams of data-vector generation units according to embodiments;
Fig. 3 is a flow chart for a method of operating a data-vector generation unit;
Fig. 4a illustrates schematically a data-vector generation unit according to an embodiment; and
Fig. 4b and c are block diagrams of data-vector generation units according to embodiments.

### Detailed Description

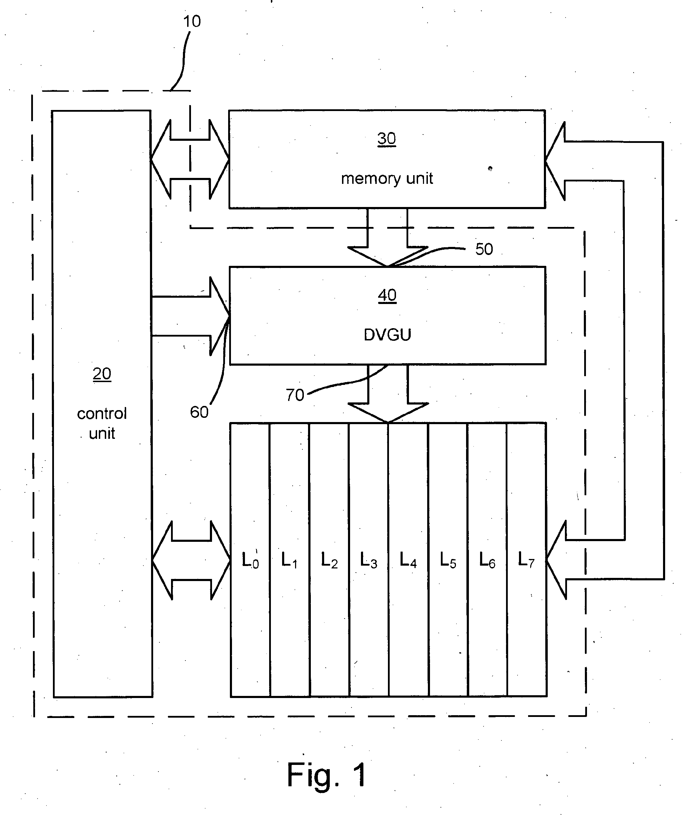

Fig. 1 is a block diagram of a single-instruction multiple-data (SIMD) processor 10 according to an embodiment. According to the embodiment, the SIMD processor 10 comprises a plurality of parallel computation paths, or lanes, L₀-L₇. In the embodiment illustrated in Fig. 1, the number of lanes is eight. This is only an example, any number of lanes may be used. Typically, the number of lanes in a SIMD processor is an integer power of two, e.g. four, eight, sixteen, etc. However, other numbers of lanes may be used within the scope of the invention as well. The lanes L₀-L₇ are arranged to all execute the same operation, but on different data, in parallel. The operation to be executed in parallel may be specified by means of software instructions of the SIMD processor.

Further, the SIMD processor 10 comprises a control unit 20 adapted to control the operation of various functional units, e.g. in response to software instructions. Moreover, the SIMD processor 10 may be operatively connected to a memory unit 30. The memory unit 30 may be adapted to store e.g. data, coefficients, and/or software instructions of the SIMD processor. The memory unit 30 may e.g. comprise one or more physical read/write memories, such as random access memories (RAM), and/or read-only memories (ROM).

In addition, the SIMD processor 10 comprises a data-vector generation unit (DVGU) 40 adapted to be operatively connected to the memory unit 30 and the plurality of lanes L₀-L₇. According to embodiments, the DVGU 40 comprises a first input port 50 for receiving an input vector of data elements. For example, as indicated in Fig. 1, the DVGU 40 may be arranged to receive the input vector from the memory unit 30. Moreover, the DVGU 40 comprises an output port 70 for outputting an output vector of data elements. Each data element of the output vector may e.g. be supplied to a unique lane of the plurality of lanes L₀-L₇. The DVGU 40 further comprises a second input port 60 for receiving a control vector. The DVGU 40 is adapted to generate the data elements of the output vector based on the input vector and the control vector. For example, an element of the control vector may be set to indicate which data element, if any, of the input vector that should be used for generating a specific data element of the output vector. Further, said element of the control vector may be set to specify an operation, e.g. arithmetic or logic operation, to be applied in order to generate said data element of the output vector.

According to some embodiments, the control vector may be supplied to the DVGU 40 from a register (not shown) of the SIMD processor 10. The content of the register may be set, e.g. by means of a software instruction, such as a "load" instruction. Additionally or alternatively, the control unit 20 may have stored therein, e.g. in a hard-coded memory (not shown), a set of one or more predetermined control vectors. The control unit may be adapted to select one of the predetermined control vectors and supply the selected one of the predetermined control vectors to the DVGU 40 in response to software instructions.

The SIMD processor 10 is used in this specification as an example wherein the DVGU 40 may be utilized. However, the application of the DVGU 40 is not limited to SIMD processors. The DVGU 40 may also be utilized for efficient fetching of data e.g. in other types of processors, such as but not limited to parallel processors, like multiple-instruction multiple-data (MIMD) processors or multiple-instruction single-data (MISD) processors, or scalar processors.

Throughout this specification, the input vector is denoted A, the output vector is denoted B, and the control vector is denoted C. Further, the first element of a vector is given the index 0, and the last element of a vector is given the index N - 1, where N is the number of elements in the vector. For example, if A has four data elements, these elements are denoted A [0], A[1], A[2], and A[3]. Hence, in this example, the input vector is A = [A[0], A[1], A[2], A[3]]

According to some embodiments, the output vector comprises more data elements than the input vector. Thereby, generation of a vector whose elements can be derived from a number of elements that are less than the number of elements in the vector is facilitated. It is an advantage that the vector can be generated without having to store the whole vector in memory or requiring additional instructions, which in turn may require additional instruction cycles and/or lead to the creation of bubbles in a pipeline of the SIMD processor, for the generation of the vector. For example, for a butterfly operation, a real coefficient R and an imaginary coefficient I may be fetched from the memory unit 30. That is, the input vector may be A = [R, I]. The coefficient vector to be used for the butterfly operation is [R, -I, R, I]. Hence, the first element of the control vector, C[0], may be set to indicate that the first data element of the output vector, B[0], is to be generated identical to the first data element of the input vector, A[0]. The second element of the control vector, C[1], may be set to indicate that the second data element of the output vector, B[1], is to be generated by negating the second data element of the input vector, A[1]. Furthermore, the third element of the control vector, C[2], may be set to indicate that the third data element of the output vector, B[2], is to be generated identical to the first data element of the input vector, A[0]. Moreover, the fourth element of the control vector, C[3], may be set to indicate that the fourth data element of the output vector, B[3], is to be generated identical to the second data element of the input vector, A[1].

According to some embodiments, the DVGU 40 is adapted to, for a data element in the output vector, select one data element from the input vector based on the control vector. Further, the DVGU 40 is adapted to generate said data element in the output vector by performing an operation on the selected data element from the input vector. The operation is specified in the control vector. For example, in line with the butterfly example above, the element C[k] of the control vector may be set to indicate that a specific data element A[j] of the input vector should be used for generating the data element B[k] of the output vector. Further, C[k] may be set to indicate an operation to be performed on A[j] in order to generate B[k]. The DVGU 40 may be adapted to generate B[k] by performing said operation indicated by C[k] on A[j].

According to some embodiments, the control vector may be set to indicate that said data element of the output vector is to be generated identical to said selected data element in the input vector. For example, C[k] may be set to indicate that B[k] is to be generated identical to A[j]. According to these embodiments, the DVGU 40 is adapted to generate said data element in the output vector identical to the selected data element from the input vector based on the control vector. That is, the DVGU 40 is adapted to generate said data element in the output vector identical to the selected data element from the input vector when this operation is indicated in the control vector.

According to some embodiments, the control vector may be set to indicate that said data element of the output vector is to be generated as the sign of said selected data element in the input vector. For example, C[k] may be set to indicate that B[k] is to be generated as the sign of A[j]. B[k] may e.g. be generated as -1 when A[j] < 0, 0 when A[j] = 0, and 1 when A[j] > 0. According to these embodiments, the DVGU 40 is adapted to generate said data element in the output vector as the sign of the selected data element from the input vector based on the control vector. That is, the DVGU 40 is adapted to generate said data element in the output vector as the sign of the selected data element from the input vector when this operation is indicated in the control vector. The sign of a data element may e.g. be utilized in calculations for rounding the data element towards zero or away from zero. Furthermore, the sign of the data element may be utilized for calculating the absolute value of the data element, e.g. by means of multiplying the sign of the data element with the data element.

According to some embodiments, the control vector may be set to indicate that said data element of the output vector is to be generated as the negated sign of said selected data element in the input vector. For example, C[k] may be set to indicate that B[k] is to be generated as the negated sign of A[j]. B[k] may e.g. be generated as 1 when A[j] < 0, 0 when A[j] = 0, and -1 when A[j] > 0. According to these embodiments, the DVGU 40 is adapted to generate said data element in the output vector as the negated sign of the selected data element from the input vector based on the control vector. That is, the DVGU 40 is adapted to generate said data element in the output vector as the negated sign of the selected data element from the input vector when this operation is indicated in the control vector. The negated sign of a data element may e.g., similarly to the sign of the data element, be utilized in calculations for rounding the data element towards zero or away from zero.

According to some embodiments, the control vector may be set to indicate that said data element of the output vector is to be generated as the absolute value of said selected data element in the input vector. For example, C[k] may be set to indicate that B[k] is to be generated as the absolute value of A[j], i.e. |A[j]|. According to these embodiments, the DVGU 40 is adapted to generate said data element in the output vector as the absolute value of the selected data element from the input vector based on the control vector. That is, the DVGU 40 is adapted to generate said data element in the output vector as the absolute value of the selected data element from the input vector when this operation is indicated in the control vector.

According to some embodiments, the control vector may be set to indicate that said data element of the output vector is to be generated as the negated value of said selected data element in the input vector. For example, C[k] may be set to indicate that B[k] is to be generated as the negated value of A[j], i.e. -A[j]. According to these embodiments, the DVGU 40 is adapted to generate said data element in the output vector as the negated value of the selected data element from the input vector based on the control vector. That is, the DVGU 40 is adapted to generate said data element in the output vector as the negated value of the selected data element from the input vector when this operation is indicated in the control vector. The negated value of a data element may e.g. be needed in calculations involving complex numbers, such as the butterfly coefficient example above where a negation of the imaginary coefficient is required.

According to some embodiments, the control vector may be set to indicate that said element of the output vectors to be generated as a constant from a predetermined set of constants. The set of constants comprises at least one constant. For example, C[k] may be set to indicate that B[k] is to be generated as a constant K of the set of constants. According to these embodiments, the DVGU 40 is adapted to select one constant from the set of constants based on the control vector and assign the selected constant to said data element in the output vector. That is, the DVGU 40 is adapted to select said one constant from the set of constants and assign the selected constant to said data element in the output vector when this operation is indicated in the control vector. According to some embodiments, the predetermined set of constants comprises at least one of the numbers -1, 0, and 1. Setting a data element in the output vector to a constant may e.g. be useful for setting the data element to a default value when input data to an operation is unavailable. For example, a stereo audio processing application running on e.g. a SIMD processor may be set up to operate on interleaved data vectors, where every other data element comprises audio data for the right channel and every other data element comprises audio data for the left channel. If only mono audio data is available as input data to the audio processing application, the mono audio data may be assigned to one of the stereo channels, i.e. the right or the left channel, and a default value may be assigned to the other stereo channel. This may e.g. be accomplished by means of the DVGU 40. As an illustrative example, the DVGU 40 may receive an input vector A = [M0, M1, M2, M3] comprising four consecutive mono audio data samples M0, M1, M2, and M3. The DVGU 40 may, based on the control vector, assign data elements of the input vector to every other data element of the output vector and assign a default value, e.g. 0, to the remaining data elements of the output vector. For example, the DVGU 40 may be controlled to generate the output vector B = [M0, 0, M1, 0, M2, 0, M3, 0].

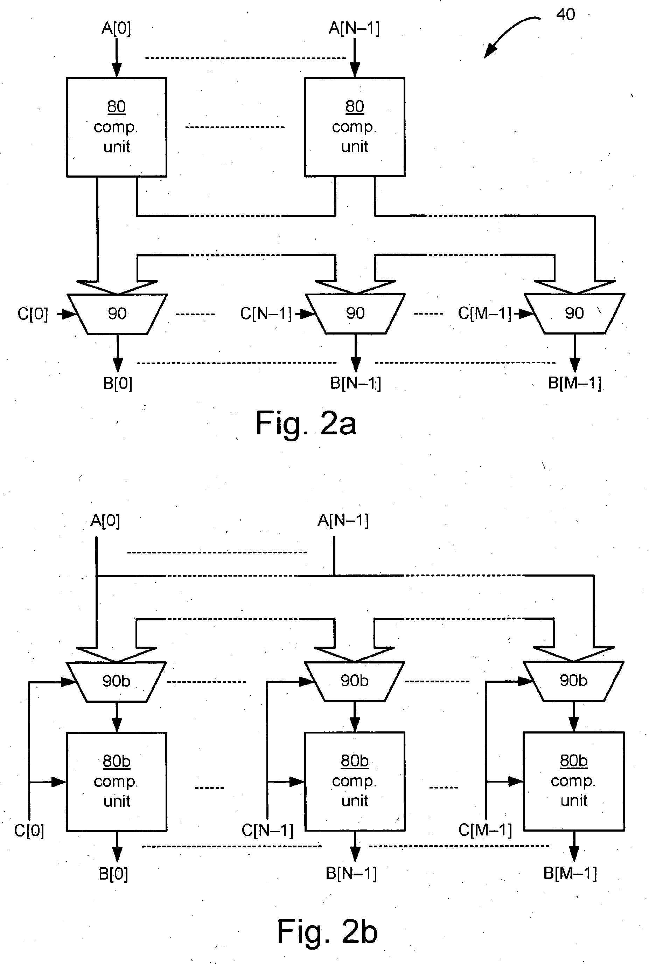

Fig. 2a shows a block diagram of the DVGU 40 according to an embodiment. According to the embodiment, the input vector A has N data elements, the output vector B has M data elements, where M > N, and the control vector C has M elements. According to the embodiment, the DVGU 40 comprises N computation units 80. Each of the computation units 80 is arranged to receive one of the data elements from the input vector A, as indicated in Fig. 2a.

In the following, reference is made to a single computation unit 80, namely the computation unit 80 that is arranged to receive the data element A[j]. The description of this single computation unit is valid for all computation units 80 comprised in the DVGU 40. The computation unit 80 is adapted to generate at least one computed data element based on A[j]. The at least one computed data element may e.g. comprise one or more of A[j], the sign of A[j], the negated sign of A[j], the absolute value of A[j], and the negated value of A[j].

According to the embodiment, the DVGU 40 further comprises M multiplexers 90. Each of the multiplexers 90 is adapted to output one of the data elements of the output vector B, as indicated in Fig. 2a. All of the computed data elements from all of the computation units 80 are distributed as input data elements to all of the multiplexers 90. Further, according to some embodiments, one or more constants (not shown in Fig. 2a) are supplied as input data elements to each of the multiplexers 90. According to some embodiments, the one or more constants include at least one of -1, 0, and 1.

According the embodiment illustrated in Fig. 2a, each of the multiplexers 90 is arranged to receive one of the elements of the control vector C and output a data element of the output vector B based on said element of the control vector C. For example, the multiplexer that is arranged to receive the element C[0] of the control vector C is adapted to output the data element B[0] of the output vector B based on C[0], the multiplexer that is arranged to receive the element C[1] of the control vector C is adapted to output the data element B[1] of the output vector B based on C[1], etc., as indicated in Fig. 2a.

In the following, reference is made to a single multiplexer 90, namely the multiplexer which is arranged to receive the element C[k] of the control vector C and generate the element B[k] of the output vector B based on C[k]. The description of this single multiplexer is valid for all multiplexers 90 comprised in the DVGU 40. The multiplexer 90 is adapted to select one of the input data elements input to the multiplexer based on C[k] and output said selected input data element as the data element B[k] of the output vector B. The selected input data element may e.g. be any of the computed data elements from any of the computation units 80. Alternatively, in embodiments where the one or more constants are supplied as input data elements to the multiplexers 90, the selected input data element may be any of the computed data elements from any of the computation units 80 or any of the one or more constants.

Fig. 2b shows a block diagram of the DVGU 40 according to another embodiment. According to the embodiment, the input vector A has N data elements, the output vector B has M data elements, where M > N, and the control vector C has M elements. According to the embodiment, the DVGU 40 comprises M computation units 80b and M multiplexers 90b. Each of the multiplexers 90b is arranged to receive all of the data elements from the input vector A, as indicated in Fig. 2b. Moreover, each of the multiplexers 90b is operatively connected to one of the computation units 80b. Furthermore, each pair of a multiplexer 90b and a computation unit 80b, which are operatively connected to each other, is arranged to be controlled by one of the elements of the control vector C, as indicated in Fig. 2b.

In the following, reference is made to a single pair of a multiplexer 90b and computation unit 80b, namely the pair which is arranged to be controlled by the element C[k] of the control vector C. The description of this single pair is valid for all pairs of multiplexers 90b and computation units 80b comprised in the DVGU 40. The multiplexer 90b is adapted to select and output one of the data elements of the input vector A based on a first subset of the bits of C[k]. The computation unit 80b is adapted to generate the data element B[k] of the output vector B based on said selected data element of the input vector A and a second subset of the bits of C[k]. The second subset of bits of C[k] may be set to select an operation to be performed on the selected data element from the input vector A by the computation unit 80b in order to generate B[k]. The computation unit 80b may e.g. be adapted to be controlled by the second subset of bits of C[k] to generate B[k] identical to the selected data element from the input vector A, as the sign of the selected data element from the input vector A, as the negated sign of the selected data element from the input vector A, as the absolute value of the selected data element from the input vector A, or the negated value of the selected data element from the input vector A. In some embodiments, the computation unit 80b is adapted to be controlled by the second subset of bits of C[k] to generate B[k] either by performing an operation on the selected data element from the input vector A or by assigning one of a predetermined set of constants to B[k]. The predetermined set of constants may e.g. include one or more of -1, 0, and 1. Which operation to perform or which constant to assign to the data element B[k] may be specified in the second subset of bits of C[k].

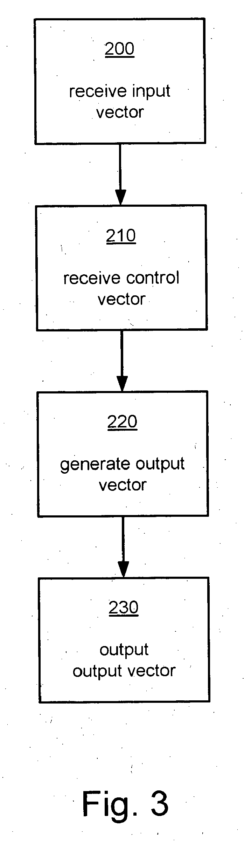

According to some embodiments, a method of operating a parallel processor comprising the DVGU 40 is provided. Fig. 3 shows a flow chart of the method according to an embodiment. According to the embodiment, the input vector is received on the first input port 50 in step 200, e.g. from a memory unit such as the memory unit 30 (Fig. 1). Further, the control vector is received on the second input port 60 in step 210. In step 220, the output vector is generated based on the input vector and the control vector. The output vector may e.g. be generated in accordance with any of the embodiments presented above. In step 220, the output vector is output on the output port 70. The output vector may e.g. be output to the plurality of lanes L₀-L₇ (Fig. 1). Each data element of the output vector may e.g. be supplied to a unique lane of the plurality of lanes L₀-L₇.

The flow chart shown in Fig. 3 is only an example. Some of the steps may be carried out in a different order or in parallel. For example, step 200 and 210 may be carried out in the reversed order or in parallel.

In the embodiments described so far in this specification, the number of data elements in the output vector of the DVGU 40 is higher than the number of data elements in the input vector to the DVGU 40. According to other embodiments, a DVGU where the number of data elements in the output vector is equal to the number of data elements in the input vector may be advantageously employed. Even though the number of elements that e.g. need to be fetched from memory are the same as the number of elements in the output vector, other advantages may be obtained with such an DVGU. For example, operations, that would otherwise be performed e.g. within the lanes of a SIMD processor, on the data elements that are fetched from the memory may be performed, by means of the DVGU, while fetching the data from the memory. Thereby, one or more instruction cycles may be saved. Furthermore, if the SIMD processor has a pipelined architecture, the creation of bubbles in the pipeline of the SIMD processor may be avoided. Thereby, the pipeline may be more efficiently utilized.

In the following, embodiments are described wherein the number of data elements in both the input vector A and the output vector B is N.

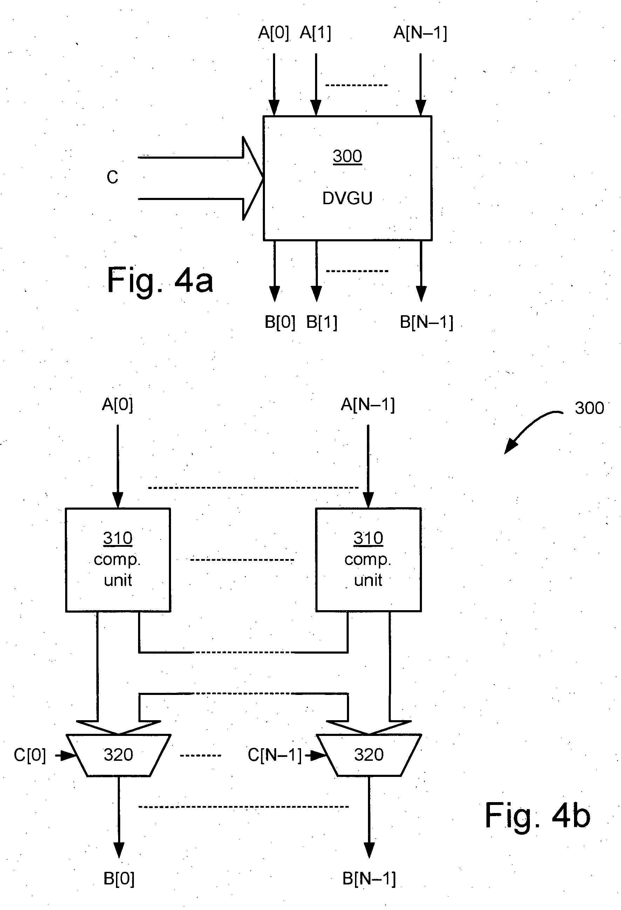

Fig. 4a illustrates schematically a DVGU 300 having N data elements in the input vector and N elements in the output vector.

Fig. 4b shows a block diagram of the DVGU 300 according to an embodiment. According to this embodiment, the control vector C has N elements. Further, according to the embodiment, the DVGU 300 comprises N computation units 310. Each of the computation units 300 is arranged to receive one of the data elements from the input vector A, as indicated in Fig. 4b.

In the following, reference is made to a single computation unit 310, namely the computation unit 310 that is arranged to receive the data element A[j]. The description of this single computation unit is valid for all computation units 310 comprised in the DVGU 300. The computation unit 310 is adapted to generate at least one computed data element based on A[j] by means of operations performed on A[j]. According to embodiments, the at least one computed data element comprises at least one data element that is generated by means of an operation that is different from an identity operation, i.e. by means of an operation that for at least one value of A[j] generates a computed data element that is different from said value of A[j]. For example, the computation unit 310 may be adapted to generate one or more of the sign of A[j], the negated sign of A[j], the absolute value of A[j], and the negated value of A[j]. In addition thereto, the computation unit 310 may be adapted to output A[j] as a computed data element.

According to the embodiment, the DVGU 300 further comprises N multiplexers 320. Each of the multiplexers 320 is adapted to output one of the data elements of the output vector B, as indicated in Fig. 4b. All of the computed data elements from all of the computation units 310 are distributed as input data elements to all of the multiplexers 320. Further, according to some embodiments, one or more constants (not shown in Fig. 4b) are supplied as input data elements to each of the multiplexers 320. According to some embodiments, the one or more constants include at least one of -1, 0, and 1.

According the embodiment illustrated in Fig. 4b, each of the multiplexers 320 is arranged to receive one of the elements of the control vector C and output a data element of the output vector B based on said element of the control vector C. For example, the multiplexer 320 that is arranged to receive the element C[0] of the control vector C is adapted to output the data element B[0] of the output vector B based on C[0], the multiplexer 320 that is arranged to receive the element C[1] of the control vector C is adapted to output the data element B[1] of the output vector B based on C[1], etc., as indicated in Fig. 4b.

In the following, reference is made to a single multiplexer 320, namely the multiplexer 320 which is arranged to receive the element C[k] of the control vector C and generate the element B[k] of the output vector B based on C[k]. The description of this single multiplexer is valid for all multiplexers 320 comprised in the DVGU 300. The multiplexer 320 is adapted to select one of the input data elements input to the multiplexer 320 based on C[k] and output said selected input data element as the data element B[k] of the output vector B. The selected input data element may e.g. be any of the computed data elements from any of the computation units 310. Alternatively, in embodiments where the one or more constants are supplied as input data elements to the multiplexers 320, the selected input data element may be any of the computed data elements from any of the computation units 310 or any of the one or more constants.

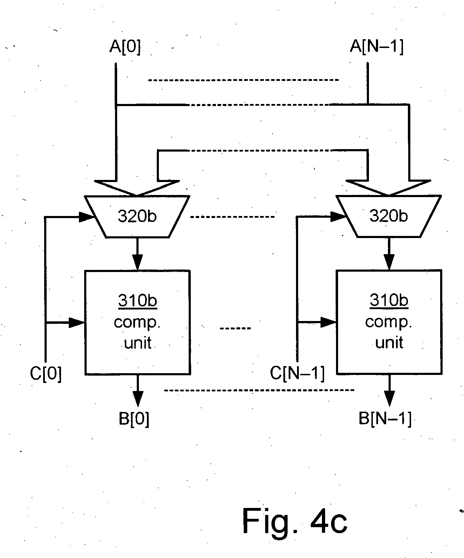

Fig. 4c shows a block diagram of the DVGU 300 according to another embodiment. According to the embodiment, the input vector A and the output vector B each have N data elements. Moreover, the control vector C also has N elements. According to the embodiment, the DVGU 300 comprises N computation units 310b and N multiplexers 320b. Each of the multiplexers 320b is arranged to receive all of the data elements from the input vector A, as indicated in Fig. 4c. Moreover, each of the multiplexers 320b is operatively connected to one of the computation units 310b. Furthermore, each pair of a multiplexer 320b and a computation unit 310b, which are operatively connected to each other, is arranged to be controlled by one of the elements of the control vector C, as indicated in Fig. 4c.

In the following, reference is made to a single pair of a multiplexer 320b and computation unit 310b, namely the pair which is arranged to be controlled by the element C[k] of the control vector C. The description of this single pair is valid for all pairs of multiplexers 320b and computation units 310b comprised in the DVGU 300. The multiplexer 320b is adapted to select and output one of the data elements of the input vector A based on a first subset of the bits of C[k]. The computation unit 310b is adapted to generate the data element B[k] of the output vector B based on said selected data element of the input vector A and a second subset of the bits of C[k]. The computation unit 310b is adapted to perform a set of operations, the set comprising at least one operation. The set of operations comprises at least one operation that is different from an identity operation. In addition thereto, the set of operations may comprise the identity operation. The second subset of bits of C[k] may be set to select an operation to be performed on the selected data element from the input vector A by the computation unit 310b in order to generate B[k]. Moreover, the computation unit 310b is adapted to be controlled by the second subset of bits of C[k] to generate B[k] by means of performing one of the set of operations on the selected data,element from the input vector A.

According to some embodiments, the set of operations that may be performed on the selected data element from the input vector by the computation unit 310b comprises one or more of operations for generating the sign of the selected data element, the negated sign of the selected data element, the absolute value of the selected data element, or the negated value of the selected data element. In addition thereto, the set of operations may comprise an operation for generating B[k] identical to the selected data element from the input vector A.

In some embodiments, the computation unit 310b is adapted to be controlled by the second subset of bits of C[k] to generate B[k] either by performing an operation on the selected data element from the input vector A or by assigning one of a predetermined set of constants to B[k]. The predetermined set of constants may e.g. include one or more of -1, 0, and 1. Which computational operation to perform or which constant to assign to the data element B[k] may be specified in the second subset of bits of C[k].

More generally, the DVGU 300 (Fig. 4a) may be adapted to, for a data element in the output vector, select one element from the input vector based on the control vector. Further, the DVGU 300 may be adapted to generate said data element in the output vector by performing an operation on the selected data element from the first vector. The operation may be specified in the control vector. According to some embodiments, the DVGU 300 is adapted to generate said data element in the output vector by performing an operation, which is different from an identity operation, on the selected data element based on the control vector. For example, the DVGU 300 may be adapted to generate said data element of the output vector as the sign, the negated sign, the negated value, and/or the absolute value of the selected data element based on the control vector.

According to some embodiments, the DVGU 300 may in addition be adapted to generate said data element in the output vector identical to the selected data element from the input vector based on the control vector.

According to some embodiments, the DVGU 300 may be adapted to select one constant from a predetermined set of constants based on the control vector and assign the selected constant to said data element in the output vector. The set of constants comprises at least one constant. The set of constants may e.g. comprise at least one of -1, 0, and 1.

As for the DVGU 40, a parallel, processor comprising the DVGU 300 may be operated in accordance with the method presented with reference to Fig. 3. The input vector may be received in step 200. For example, the input vector may be received from a memory unit. Further, the control vector may be received in step 210. In step 220, the output vector may be generated based on the input vector and the control vector. The output vector may e.g. be generated in accordance with any of the embodiments presented above. In step 220, the output vector may be output by the DVGU 300. The output vector may e.g. be output to a plurality of lanes of the parallel processor. Each data element of the output vector may e.g. be supplied to a unique lane of said plurality of lanes.

As for the operation of the DVGU 40, the flow chart shown in Fig. 3 is only an example. Some of the steps may be carried out in a different order or in parallel. For example, step 200 and 210 may be carried out in the reversed order or in parallel.

According to some embodiments, the DVGU 40 or DVGU 300 is comprised in an electronic apparatus. For example, the electronic apparatus may comprise a data-processing unit, such as but not limited to a parallel processor like the SIMD processor 10 (Fig. 1). The data-processing unit may in turn comprise the DVGU 40 or DVGU 300. The electronic apparatus may e.g. be, but is not limited to, one of a portable or handheld mobile radio communication equipment, a mobile radio terminal, a mobile telephone, a pager, a communicator, an electronic organizer, a smartphone and a computer.

The present invention has been described above with reference to specific embodiments. However, other , embodiments than the above described are possible within the scope of the invention. Different method steps than those described above may be provided within the scope of the invention. The different features and steps of the invention may be combined in other combinations than those described. The scope of the invention is only limited by the appended patent claims.

## Claims

1. A parallel processor (10) having a plurality of parallel computational lanes (L₀-L₇), the computational lanes all being arranged to execute the same operation, but on different data, in parallel, the operation to be executed in parallel being specified by software instructions of the parallel processor, comprising
a data-vector generation unit (40) comprising
- a first input port (50) for receiving a first vector of data elements from a memory unit (30);
- a second input port (60) for receiving a control vector; and
- an output port (70) for outputting a second vector of data elements to the plurality of parallel computational lanes by supplying each data element of the second vector to a unique lane of the plurality of computational lanes, the second vector comprising more data elements than the first vector;
the data-vector generation unit (40) being adapted to generate the data elements of the second vector based on the data elements of the first vector and the control vector,
wherein the data vector generation unit (40) is adapted to, for a data element in the second vector,
- select one data element from the first vector based on control data in the control vector; and
- generate said data element in the second vector by performing an operation, which is specified in the control vector, on the selected data element from the first vector, such that the data element in the second vector is generated, based on control data in the control vector, as one of:
- identical to the selected data element from the first vector,
- the sign of the selected data element from the first vector,
- the negated sign of the selected data element from the first vector,
- the absolute value of the selected data element from the first vector, or
- the negated value of the selected data element from the first vector.

2. The parallel processor (10) according to claim 1, wherein the data-vector generation unit (40) is adapted to, for a data element in the second vector, select one constant from a predetermined set of constants based on control data in the control vector and assign the selected constant to said data element in the second vector.

3. The parallel processor (10) according to claim 2, wherein the predetermined set of constants comprises at least one of the numbers -1, 0, and 1.

4. The parallel processor (10) according to any of the preceding claims, wherein the parallel processor (10) is a single-instruction multiple-data processor.

5. An electronic apparatus comprising a parallel processor (10) according to any of the claims 1-4.

6. The electronic apparatus according to claim 5, wherein the electronic apparatus is a portable or handheld mobile radio communication equipment, a mobile radio terminal, a mobile telephone, a pager, a communicator, an electronic organizer, a smartphone or a computer.

7. A method of operating a parallel processor (10) having a plurality of parallel computational lanes (L₀-L₇), the computational lanes all being arranged to execute the same operation, but on different data, in parallel, the operation to be executed in parallel being specified by software instructions of the parallel processor, the method comprising
receiving a first vector of data elements from a memory unit (30) on a first input port (50) of a data-vector generation unit (40) of the parallel processor (10);
receiving a control vector on a second input port (60) of the data-vector generation unit (40);
generating data elements of a second vector of data elements based on the data elements of the first vector and the control vector, wherein the second vector comprises more data elements than the first vector and wherein a data element in the second vector is generated, based on control data in the control vector, as one of:
- identical to the selected data element from the first vector,
- the sign of the selected data element from the first vector,
- the negated sign of the selected data element from the first vector,
- the absolute value of the selected data element from the first vector, or
- the negated value of the selected data element from the first vector; and
outputting the second vector to a plurality of computational lanes (L₀-L₇) of the parallel processor via an output port (70) of the data-vector generation unit (40) by supplying each data element of the second vector to a unique lane of the plurality of computational lanes.

## Patentansprüche

1. Parallelprozessor (10) mit einer Mehrzahl von parallelen Rechenpfaden (L₀-L₇), wobei die Rechenpfade allesamt so ausgelegt sind, dass sie die gleiche Operation, aber an verschiedenen Daten parallel ausführen, wobei die parallel auszuführende Operation durch Softwarebefehle des Parallelprozessors spezifiziert ist, umfassend:
eine Datenvektor-Erzeugungseinheit (40), umfassend:
- einen ersten Eingangsport (50) zum Empfangen eines ersten Vektors von Datenelementen von einer Speichereinheit (30);
- einen zweiten Eingangsport (60) zum Empfangen eines Steuervektors; und
- einen Ausgangsport (70) zum Ausgeben eines zweiten Vektors von Datenelementen an die Mehrzahl von parallelen Rechenpfaden durch Zuführen jedes Datenelements des zweiten Vektors zu einem eindeutigen Pfad der Mehrzahl von Rechenpfaden, wobei der zweite Vektor mehr Datenelemente als der erste Vektor umfasst;
wobei die Datenvektor-Erzeugungseinheit (40) so ausgelegt ist, dass sie die Datenelemente des zweiten Vektors basierend auf den Datenelementen des ersten Vektors und des Steuervektors erzeugt,
wobei die Datenvektor-Erzeugungseinheit (40) so ausgelegt ist, dass sie für ein Datenelement im zweiten Vektor
- ein Datenelement aus dem ersten Vektor basierend auf Steuerdaten im Steuervektor auswählt; und
- das Datenelement im zweiten Vektor durch Ausführen einer Operation, die im Steuervektor spezifiziert ist, an dem ausgewählten Datenelement aus dem ersten Vektor erzeugt, derart dass das Datenelement im zweiten Vektor basierend auf Steuerdaten im Steuervektor erzeugt wird als eines von:
- gleich dem ausgewählten Datenelement aus dem ersten Vektor,
- dem Vorzeichen des ausgewählten Datenelements aus dem ersten Vektor,
- dem negierten Vorzeichen des ausgewählten Datenelements aus dem ersten Vektor,
- dem Absolutwert des ausgewählten Datenelements aus dem ersten Vektor oder
- dem negierten Wert des ausgewählten Datenelements aus dem ersten Vektor.

2. Parallelprozessor (10) nach Anspruch 1, wobei die Datenvektor-Erzeugungseinheit (40) so ausgelegt ist, dass sie für ein Datenelement im zweiten Vektor eine Konstante aus einem vorbestimmten Satz von Konstanten basierend auf Steuerdaten im Steuervektor auswählt und die ausgewählte Konstante dem Datenelement im zweiten Vektor zuordnet.

3. Parallelprozessor (10) nach Anspruch 2, wobei der vorbestimmte Satz von Konstanten mindestens eine der Zahlen -1, 0 und 1 umfasst.

4. Parallelprozessor (10) nach einem der vorhergehenden Ansprüche, wobei der Parallelprozessor (10) ein Einzelbefehl-Mehrfachdaten-Prozessor ist.

5. Elektronische Vorrichtung, umfassend einen Parallelprozessor (10) nach einem der Ansprüche 1 bis 4.

6. Elektronische Vorrichtung nach Anspruch 5, wobei die elektronische Vorrichtung ein tragbare oder handgehaltene Mobilfunkkommunikationseinrichtung, ein Mobilfunkendgerät, ein Mobiltelefon, ein Pager, ein Kommunikator, ein elektronischer Organizer, ein Smartphone oder ein Computer ist.

7. Verfahren zum Betreiben eines Parallelprozessors (10) mit einer Mehrzahl von parallelen Rechenpfaden (L₀-L₇), wobei die Rechenpfade allesamt so ausgelegt sind, dass sie die gleiche Operation, aber an verschiedenen Daten parallel ausführen, wobei die parallel auszuführende Operation durch Softwarebefehle des Parallelprozessors spezifiziert wird, umfassend:
Empfangen eines ersten Vektors von Datenelementen von einer Speichereinheit (30) an einem ersten Eingangsport (50) einer Datenvektor-Erzeugungseinheit (40) des Parallelprozessors (10);
Empfangen eines Steuervektors an einem zweiten Eingangsport (60) der Datenvektor-Erzeugungseinheit (40);
Erzeugen von Datenelementen eines zweiten Vektors von Datenelementen basierend auf den Datenelementen des ersten Vektors und des Steuervektors, wobei der zweite Vektor mehr Datenelemente als der erste Vektor umfasst, und wobei ein Datenelement im zweiten Vektor basierend auf Steuerdaten im Steuervektor erzeugt wird als eines von:
- gleich dem ausgewählten Datenelement aus dem ersten Vektor,
- dem Vorzeichen des ausgewählten Datenelements aus dem ersten Vektor,
- dem negierten Vorzeichen des ausgewählten Datenelements aus dem ersten Vektor,
- dem Absolutwert des ausgewählten Datenelements aus dem ersten Vektor oder
- dem negierten Wert des ausgewählten Datenelements aus dem ersten Vektor; und
Ausgeben des zweiten Vektors an eine Mehrzahl von Rechenpfaden (L₀-L₇) des Parallelprozessors über einen Ausgangsport (70) der Datenvektor-Erzeugungseinheit (40) durch Zuführen jedes Datenelements des zweiten Vektors zu einem eindeutigen Pfad der Mehrzahl von Rechenpfaden.

## Revendications

1. Processeur parallèle (10) ayant une pluralité de couloirs de traitement informatique (L₀-L₇), les couloirs de traitement informatique étant tous agencés de manière à exécuter la même opération, mais sur des données différentes, en parallèle, l'opération à exécuter en parallèle étant spécifiée par des instructions logicielles du processeur parallèle, comprenant
une unité de génération de vecteur de données (40) comprenant
- un premier port d'entrée (50) pour recevoir un premier vecteur d'éléments de données provenant d'une unité de mémoire (30) ;
- un second port d'entrée (60) pour recevoir un vecteur de commande ; et
- un port de sortie (70) pour délivrer un second vecteur d'éléments de données vers la pluralité de couloirs de traitement informatique parallèles en alimentant chaque élément de données du second vecteur dans un couloir unique de la pluralité de couloirs de traitement informatique, le second vecteur comprenant plus d'éléments de données que le premier vecteur ;
l'unité de génération de vecteur de données (40) étant adaptée pour générer les éléments de données du second vecteur sur la base des éléments de données du premier vecteur et du vecteur de commande,
dans lequel l'unité de génération de vecteur de données (40) est adaptée afin de, pour un élément de données dans le second vecteur,
- sélectionner un élément de données du premier vecteur sur la base des données de commande dans le vecteur de commande ; et
- générer ledit élément de données dans le second vecteur en effectuant une opération, qui est spécifiée dans le vecteur de commande, sur l'élément de données sélectionné du premier vecteur, de sorte que l'élément de données dans le second vecteur soit généré, sur la base des données de commande dans le vecteur de commande, comme un de :
- identique à l'élément de données sélectionné du premier vecteur,
- le signe de l'élément de données sélectionné du premier vecteur,
- le signe négatif de l'élément de données sélectionné du premier vecteur,
- la valeur absolue de l'élément de données sélectionné du premier vecteur, ou
- la valeur négative de l'élément de données sélectionné du premier vecteur.

2. Processeur parallèle (10) selon la revendication 1, dans lequel l'unité de génération de vecteur de données (40) est adaptée afin de, pour un élément de données dans le second vecteur, sélectionner une constante parmi un ensemble prédéterminé de constantes sur la base des données de commande dans le vecteur de commande et assigner la constante sélectionnée audit élément de données dans le second vecteur.

3. Processeur parallèle (10) selon la revendication 2, dans lequel l'ensemble prédéterminé de constantes comprend au moins un des nombres -1, 0 et 1.

4. Processeur parallèle (10) selon une quelconque des revendications précédentes, dans lequel le processeur parallèle (10) est un processeur de données multiples à instruction unique.

5. Dispositif électronique comprenant un processeur parallèle (10) selon une quelconque des revendications 1-4.

6. Dispositif électronique selon la revendication 5, dans lequel le dispositif électronique est un équipement de communication radio mobile ou portable, un terminal radio mobile, un téléphone mobile, un pageur, un dispositif de communication, un organiseur électronique, un téléphone intelligent ou un ordinateur.

7. Procédé de fonctionnement d'un processeur parallèle (10) ayant une pluralité de couloirs de traitement informatique parallèles (L₀-L₇), les couloirs de traitement informatique étant tous agencés afin d'exécuter la même opération, mais sur des données différentes, en parallèle, l'opération à exécuter en parallèle étant spécifiée par des instructions logicielles du processeur parallèle, le procédé comprenant de :
recevoir un premier vecteur d'éléments de données provenant d'une unité de mémoire (30) sur un premier port d'entrée (50) d'une unité de génération de vecteur de données (40) du processeur parallèle (10) ;
recevoir un vecteur de commande sur un second port d'entrée (60) de l'unité de génération de vecteur de données (40) ;
générer des éléments de données d'un second vecteur d'éléments de données sur la base des éléments de données du premier vecteur et du vecteur de commande, dans lequel le second vecteur comprend plus d'éléments de données que le premier vecteur et dans lequel un élément de données dans le second vecteur est généré, sur la base des données de commande dans le vecteur de commande, comme un de :
- identique à l'élément de données sélectionné du premier vecteur,
- le signe de l'élément de données sélectionné du premier vecteur,
- le signe négatif de l'élément de données sélectionné du premier vecteur,
- la valeur absolue de l'élément de données sélectionné du premier vecteur, ou
- la valeur négative de l'élément de données sélectionné du premier vecteur ; et
délivrer le second vecteur vers une pluralité de couloirs de traitement informatique (L₀-L₇) du processeur parallèle via un port de sortie (70) de l'unité de génération de vecteur de données (40) en alimentant chaque élément de données du second vecteur dans un couloir unique de la pluralité de couloirs de traitement informatique.
